# EUROPÄISCHE PATENTSCHRIFT

(11) **EP 1 880 125 B1**
(45) Veröffentlichungstag und Bekanntmachung des Hinweises auf die Patenterteilung: **02.09.2009**
(21) Anmeldenummer: 06805616.7
(22) Anmeldetag: 18.04.2006
(51) Int. Cl.: F16H 57/02, F16H 61/28, F16H 61/30, F16H 59/40

(54) **MEHRGRUPPENGETRIEBE**
MULTIGROUP GEARBOX
BOITE DE VITESSES A GROUPES MULTIPLES

(30) Priorität: 11.05.2005 DE 102005021760
(43) Veröffentlichungstag der Anmeldung: 23.01.2008
(73) Patentinhaber: ZF Friedrichshafen AG, 88038 Friedrichshafen (DE)
(72) Erfinder: RENNER, Stefan, 78351 Bodman-Ludwigshafen (DE); BADER, Josef, 88045 Friedrichshafen (DE)
(86) Internationale Anmeldenummer: PCT/EP2006/003511
(87) Internationale Veröffentlichungsnummer: WO 2007/019889

(56) Entgegenhaltungen:
- EP-A- 0 467 880
- EP-A- 0 541 035
- EP-A- 1 094 248
- US-A- 4 625 840

## Beschreibung

Die vorliegende Erfindung betrifft ein Mehrgruppengetriebe, umfassend einen Getriebesteller, gemäß dem Oberbegriff des Patentanspruchs 1.

Getriebe für Nutzkraftfahrzeuge weisen häufig zwölf, sechzehn oder mehr Gänge auf. Derartige Vielganggetriebe sind meist als Mehrgruppengetriebe ausgestaltet, die sich in eine Vorschaltgruppe, eine Hauptgruppe bzw. ein Hauptgetriebe und eine Bereichsgruppe aufteilen. Um den durch die Vielzahl der Gänge entstehenden komplexen Schaltablauf zu erleichtern, weisen die meisten dieser Getriebe eine mittels eines Getriebestellers automatisierte Schalteinrichtung auf. Dabei können die Schaltungen in der Vorschaltgruppe und in der Bereichsgruppe pneumatisch erfolgen, während die Schaltungen im Hauptgetriebe manuell vom Fahrzeugführer durchgeführt werden oder mittels geeigneter elektrohydraulischer, elektropneumatischer und elektromotorischer Stelleinrichtungen oder einer Kombination aus diesen Aktuatoren automatisiert ablaufen.

Derartige Fahrzeuggetriebe weisen mehrere Komponenten auf, die unterschiedlichen Funktionalitäten entsprechen, die oft in das Gehäuse des Getriebes integriert sind. Derartige Komponenten können beispielsweise Aktuatoren bzw. Getriebesteller oder Sensoren sein.

Hierbei entsteht die Notwendigkeit einer einfachen und kostengünstigen Montage dieser Komponenten sowie der Austauschbarkeit einzelner Komponenten. Des weiteren sollen überflüssige Schnittstellen vermieden werden.

Aus der DE 103 47 493 A1 der Anmelderin ist ein Fahrzeuggetriebe bekannt, mit einem Gehäuse, in oder an dem drehmomentübertragende Bauteile vorgesehen sind, die eine zwischen dem Fahrzeuggetriebe und einem das Getriebe antreibenden Motor angeordnete Kupplungseinrichtung umfassen. Des weiteren sind im oder am Gehäuse Betätigungselemente zur Betätigung der drehmomentübertragenden Bauteile angeordnet, wobei das Gehäuse einen sich in Richtung der Kupplungseinrichtung erstreckenden Bereich umfasst, in dem eine mit dem Gehäuse fest verbindbare Anschlussplatte vorgesehen ist, in der Aufnahmen für zumindest Teile der Betätigungselemente zur Betätigung der drehmomentübertragenden Bauteile vorgesehen sind. Die Betätigungselemente sind vorzugsweise Teile einer Schaltung eines Hauptgetriebes und/oder eines Splitgruppengetriebes und/oder eines Bereichsgruppengetriebes des Fahrzeuggetriebes.

Bei den aus dem Stand der Technik bekannten Konstruktionen, bei denen am Getriebegehäuse ein separates Bauteil vorgesehen ist, welches die Arbeitszylinder der Betätigungseinrichtungen und entsprechende integrierte Wegsensoren enthält, sind als weitere Bauteile die Kanalplatte, die Ventilplatte, Magnetventile, ein Drehzahlsensor und eine Steuereinheit vorgesehen. Diese Bauteile werden im Deckel des Getriebestellers befestigt, der in einer großen Tasche im Getriebegehäuse montiert wird. In nachteiliger Weise ist hierbei eine spezielle Koppelung zu den Schaltstangen erforderlich.

Aus der EP 0 541 035 A ist ein Mehrgruppengetriebe bekannt mit einer Getriebetasche zum Einbau von einem pneumatischen Getriebesteller und mit einem Eingangssensor.

Des weiteren sind die Automatisierungsbauteile des Kupplungsstellers, nämlich die Magnetventile und der Sensor im Kupplungssteller integriert, was in der Notwendigkeit eines außenliegenden Kabelbaums zur Steuereinheit (ECU) und eines separaten Luftanschlusses resultiert. Hierbei müssen zur Entlüftung des Getriebestellers Dichtstellen am Gehäuse vorgesehen sein; in nachteiliger Weise sind Rückschlagventile zur Verhinderung von Rückkopplungen der Druckluft erforderlich. Ein weiterer Nachteil derartiger Konstruktionen besteht darin, das Maßnahmen zur Geräuschdämmung, wie beispielsweise eine Gewebeeinlage mit einem Deckel erforderlich sind.
Der vorliegenden Erfindung liegt die Aufgabe zugrunde, ein als Mehrgruppengetriebe ausgebildetes Fahrzeuggetriebe, umfassend einen Getriebe-steller anzugeben, bei dem die genannten Nachteile des Standes der Technik vermieden werden.

Diese Aufgabe wird durch die Merkmale des Patentanspruchs 1 gelöst. Weitere erfindungsgemäße Ausgestaltungen und Vorteile gehen aus den Unteransprüchen hervor.

Demnach wird ein Mehrgruppengetriebe, umfassend einen Getriebesteller vorgeschlagen, bei dem im Gehäuse ein Entlüftungskanal vorgesehen ist, der sich von einer am Getriebegehäuse vorgesehenen Getriebetasche zum Einbau des Getriebestellers bis zum Abtriebssensor erstreckt, wobei die Getriebetasche auch als Sammelraum für die Abluft der Pneumatik dient.

Gemäß einer vorteilhaften Weiterbildung der Erfindung wird der Entlüftungskanal auch zur Kabelführung der für die Aufbau- und Verbindungstechnik benötigten Kabel vom Getriebesteller bis zum Abtriebssensor verwendet, so dass die Notwendigkeit eines außenliegenden Kabelbaums entfällt. Außerdem wird durch die im Kanal erzielbaren niedrigen Strömungsgeschwindigkeiten eine effektive Schalldämmung erzielt.

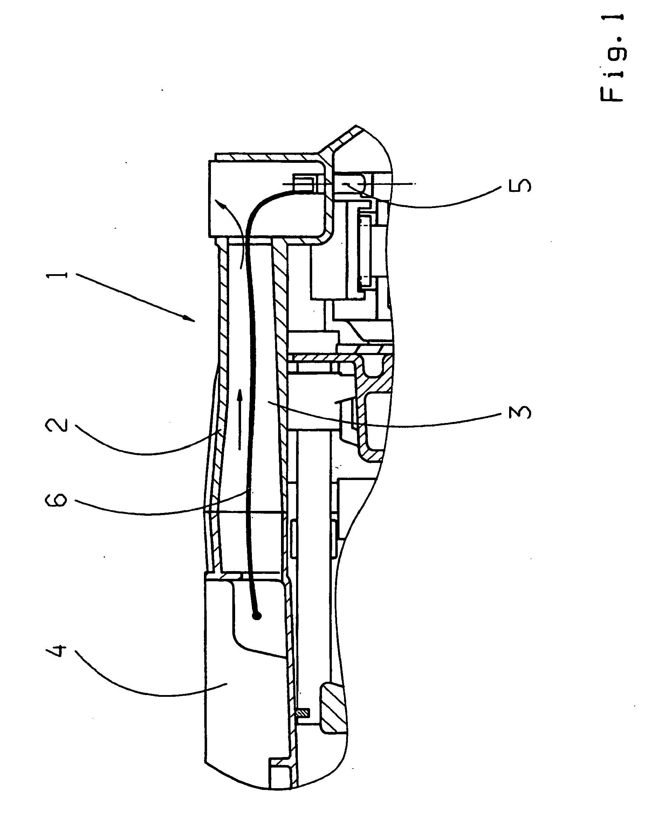

Die Erfindung wird im Folgenden anhand der beigefügten Fig. 1, welche eine schematische Schnittansicht eines Teils eines erfindungsgemäßen Mehrgruppengetriebes darstellt, beispielhaft näher erläutert.

In der Fig. 1 ist ein Teil des Getriebes 1 gezeigt. Gemäß der Erfindung ist im Gehäuse 2 ein Entlüftungskanal 3 vorgesehen, der sich von einer am Getriebegehäuse 2 vorgesehenen Getriebetasche 4 zum Einbau des vorzugsweise modular aufgebauten Getriebestellers bis zum Abtriebssensor 5 erstreckt. Hierbei dient die Getriebetasche 4 auch als Sammelraum für die Abluft, die durch den Kanal 3 geführt wird. In der Fig. 1 wird die Luftströmung durch die Pfeile veranschaulicht.

Gemäß der Erfindung wird der Entlüftungskanal 5 zur Kabelführung der für die Aufbau- und Verbindungstechnik benötigten Kabel 5 von der Getriebetasche 4 bzw. dem Getriebesteller bis zum Abtriebssensor 5 genutzt. Der Entlüftungskanal kann gegossen oder gesteckt ausgeführt sein.

Durch die erfindungsgemäße Konzeption erfolgt die Kabelführung in einem geschützten Bereich bei einer gleichzeitigen effektiven Schalldämmung. In vorteilhafter Weise sind keine Rückschlagventile zur Verhinderung von Rückkopplungen der Druckluft sowie keine zusätzlichen Maßnahmen zur Schalldämmung erforderlich.

### Bezugszeichen

- 1: Getriebe
- 2: Getriebegehäuse
- 3: Entlüftungskanal
- 4: Getriebetasche
- 5: Abtriebssensor
- 6: Kabel

## Patentansprüche

1. Mehrgruppengetriebe, umfassend einen Getriebesteller, **dadurch gekennzeichnet, dass** im Getriebegehäuse (2) ein Entlüftungskanal (3) vorgesehen ist, der sich von einer am Getriebegehäuse (2) vorgesehenen Getriebetasche (4) zum Einbau des Getriebestellers bis zum Abtriebssensor (5) erstreckt, wobei die Getriebetasche (4) auch als Sammelraum für die Abluft der Pneumatike client.

2. Mehrgruppengetriebe nach Anspruch 1, **dadurch gekennzeichnet, dass** der Entlüftungskanal (3) zur Kabelführung der für die Aufbau- und Verbindungstechnik benötigten Kabel (6) vom Getriebesteller bis zum Abtriebssensor (5) verwendet wird.

3. Mehrgruppengetriebe nach Anspruch 1 oder 2, **dadurch gekenn**-**z eichnet**, dass der Entlüftungskanal (3) gegossen oder gesteckt ausgeführt ist.

4. Mehrgruppengetriebe nach Anspruch 1, 2 oder 3, **dadurch** g e - **kennzeichnet**, dass der Entlüftungskanal (3) zur Schalldämmung verwendet wird.

## Claims

1. Multi-group transmission, comprising a transmission actuator, **characterized in that** the transmission case (2) has provided in it a venting duct (3) which extends from a transmission pocket (4), provided on the transmission case (2), for the installation of the transmission actuator, as far as the output sensor (5), the transmission pocket (4) also serving as a collecting space for the exhaust air from the pneumatics.

2. Multi-group transmission according to Claim 1, **characterized in that** the venting duct (3) is used for the cable routing of the cables (6), required for the assembling and connection technology, from the transmission actuator as far as the output sensor (5).

3. Multi-group transmission according to Claim 1 or 2, **characterized in that** the venting duct (3) is of cast or plugged-in form.

4. Multi-group transmission according to Claim 1, 2 or 3, **characterized in that** the venting duct (3) is used for sound insulation.

## Revendications

1. Boîte de vitesses à groupes multiples, comprenant un régulateur de boîte de vitesses, **caractérisé en ce que** dans le carter de la boîte de vitesses (2) est prévu un canal de désaérage (3), qui s'étend depuis une cavité de boîte de vitesses (4) prévue sur le carter de la boîte de vitesses (2) pour l'insertion du régulateur de boîte de vitesses jusqu'au capteur de prise de force (5), la cavité de boîte de vitesses (4) servant également de collecteur pour l'air évacué du système pneumatique.

2. Boîte de vitesses à groupes multiples selon la revendication 1, **caractérisée en ce que** le canal de désaérage (3) est utilisé comme guide câble pour les câbles (6) nécessaires pour la technique de construction et de connexion, reliant le régulateur de boîte de vitesses au capteur de prise de force (5).

3. Boîte de vitesses à groupes multiples selon la revendication 1 ou 2, **caractérisée en ce que** le canal de désaérage (3) est coulé ou est enfiché.

4. Boîte de vitesses à groupes multiples selon la revendication 1, 2 ou 3, **caractérisée en ce que** le canal de désaérage (3) est utilisé pour l'amortissement des sons.
